# EUROPEAN PATENT SPECIFICATION

(11) **EP 3 196 497 B1**
(45) Date of publication and mention of the grant of the patent: **06.06.2018**
(21) Application number: 17151474.8
(22) Date of filing: 13.01.2017
(51) Int. Cl.: F16D 48/06

(54) **CONTROLLER FOR VEHICLE AND CONTROL METHOD**
STEUERGERÄT FÜR FAHRZEUG UND STEUERUNGSVERFAHREN
ORGANE DE COMMANDE DE VÉHICULE ET PROCÉDÉ DE COMMANDE

(30) Priority: 20.01.2016 JP 2016009182
(43) Date of publication of application: 26.07.2017
(73) Proprietor: TOYOTA JIDOSHA KABUSHIKI KAISHA, Toyota-shi, Aichi-ken 471-8571 (JP)
(72) Inventor: OKUBO, Tadanao, Aichi-ken, 471-8571 (JP)
(74) Representative: J A Kemp

(56) References cited:
- EP-A1- 2 327 901
- DE-A1- 10 221 701
- DE-A1-102013 210 266

## Description

### BACKGROUND OF THE INVENTION

### 1. Field of the Invention

The invention relates to a controller for a vehicle and control method, the vehicle including: a transmission capable of switching a gear stage by a manual operation; a clutch for connecting/disconnecting a power transmission route between an engine and the transmission; and a clutch actuator for switching among engagement, slipping, and disengagement of the clutch.

### 2. Description of Related Art

In a power transmission apparatus for a vehicle that includes: a transmission for constituting a part of a power transmission route between an engine and drive wheels and capable of switching a gear stage by a manual operation; a clutch for connecting/disconnecting the power transmission route between the engine and the transmission; and a clutch actuator for switching among engagement, slipping, and disengagement of the clutch, a controller of the power transmission apparatus for the vehicle has been well known, the controller executing coasting control for disengaging the clutch for traveling in the case where a specified initiation condition is established during traveling, during which the gear stage of the transmission is set and the clutch is engaged, and terminating execution of the coasting control in the case where a specified termination condition is established during the execution of the coasting control. For example, a coasting controller described in Japanese Patent Application Publication No. 2010-247773 (JP 2010-247773 A) is such a controller. This JP 2010-247773 A discloses the coasting controller that executes coasting control by disengaging a clutch and bringing an engine into an idle state so as to cause coasting of a vehicle when the engine does not perform an operation that contributes to traveling of the vehicle. Such a coasting controller includes a coasting control determination map that is used to determine initiation and termination of coasting control based on an accelerator pedal operation amount and a clutch rotational speed (that is, a transmission input rotational speed). When a travel state, which is indicated by the accelerator pedal operation amount and the clutch rotational speed, falls out of a coasting control enabling region in the coasting control determination map during the coasting control, the coasting control is terminated.

DE 10 2013 210266 discloses the precharacterising features of claims 1 and 5.

### SUMMARY OF THE INVENTION

By the way, when an acceleration request is made through an operation of an accelerating operation member (for example, through depression of an accelerator pedal) during the coasting control, it is considered to prioritize prevention of over-rev of the engine (extremely high revolution) or under-rev of the engine (extremely low revolution), prohibit engagement of the clutch, and continue the coasting control. The over-rev occurs when the clutch is engaged in a state of a high vehicle speed and a low gear stage being set. The under-rev occurs when the clutch is engaged in a state of a low vehicle speed and a high gear stage being set. In such a case, the clutch is not engaged. Thus, power of the engine is not transmitted to the drive wheels, and requested travel performance (accelerating performance) cannot be satisfied. On the contrary, when the accelerating request is prioritized and the clutch is engaged, the over-rev or the under-rev of the engine possibly occurs, which possibly increases a load of the engine.

The invention provides a controller of a power transmission apparatus for a vehicle capable of transmitting power from an engine to drive wheels while suppressing a load imposed on the engine.

A first aspect of the present invention provides a controller for a vehicle, the vehicle including an engine, drive wheels, an accelerating operation member, a transmission constituting a part of a power transmission route between the engine and the drive wheels, the transmission being configured to switch a gear stage by a manual operation, a clutch configured to connect and disconnect the power transmission route
between the engine and the transmission, and a clutch actuator configured to switch among engagement, slipping, and disengagement of the clutch. The controller includes an electronic control unit configured to: switch an actuation state of the clutch by the clutch actuator; execute coasting control for disengaging the clutch for traveling when a specified initiation condition is established during traveling, during which the gear stage of the transmission is set and the clutch is engaged; terminate the execution of the coasting control when a specified termination condition is established during execution of the coasting control; determine whether a current travel state is a travel state where the clutch can be engaged based on a determination of whether an engine speed falls within a specified speed range when the clutch is engaged at a current gear stage of the transmission during the execution of the coasting control; prohibit the engagement of the clutch when the electronic control unit determines that the current travel state is not the travel state where the clutch can be engaged during the execution of the coasting control; and execute slip control when the specified termination condition is established during the execution of the coasting control and an acceleration request is made through an operation of the accelerating operation member when the engagement of the clutch is prohibited, the slip control being control in which the clutch transmits power from the engine as a state where the clutch slips.

According to the configuration, the slip control of the clutch is executed in the cases where the specified termination condition is established during the execution of the coasting control and the acceleration request is made through the operation of the accelerating operation member even when the engagement of the clutch is prohibited. Thus, the clutch can transmit the power from the engine. In addition, compared to a case where the clutch is engaged, the engine speed is suppressed from falling out of the specified speed range, or the engine speed falls within the specified speed range. Therefore, the power from the engine can be transmitted to the drive wheels while a load imposed on the engine is suppressed.

In the controller, the electronic control unit may be configured to execute the slip control by controlling displacement of the clutch by the clutch actuator such that the engine speed falls within the specified speed range, the specified speed range is a speed range where the engine speed does not exceed a specified upper limit speed and does not fall below a specified lower limit speed.

According to the configuration, the electronic control unit executes the slip control of the clutch such that the engine speed falls within the speed range that does not exceed the specified upper limit speed and does not fall below the specified lower limit speed. Thus, the load imposed on the engine can appropriately be suppressed, and a shock that occurs when the clutch is brought into a slipping state can be suppressed.

In the controller, the electronic control unit may be configured to determine whether an elapsed time period from termination of the last slip control is at least equal to a specified elapsed time period, and the electronic control unit is configured to execute the slip control when the electronic control unit determines that the elapsed time period is at least equal to the specified elapsed time period.

According to the configuration, the coasting control section executes the current slip control of the clutch in the case where the elapsed time period from the last slip control of the clutch is at least equal to the specified elapsed time period. Thus, the clutch can be protected from heating of the clutch that is associated with the slip control.

In the controller, the electronic control unit may be configured to determine whether duration of the slip control is shorter than specified duration, and the electronic control unit is configured to continue the slip control when the electronic control unit determines during the slip control that the duration is shorter than the specified duration.

According to the configuration the electronic control unit continues the slip control in the case where the duration of the slip control of the clutch is shorter than the specified duration. Thus, the clutch can be protected from heating of the clutch that is associated with the slip control.

A second aspect of the present invention provides a control method for a vehicle, the vehicle including an engine, drive wheels, an accelerating operation member, a transmission constituting a part of a power transmission route between the engine and the drive wheels, the transmission being configured to switch a gear stage by a manual operation, a clutch configured to connect and disconnect the power transmission route between the engine and the transmission, a clutch actuator configured to switch among engagement, slipping, and disengagement of the clutch, and an electronic control unit configured to switch an actuation state of the clutch by the clutch actuator. The control method includes: executing coasting control for disengaging the clutch for traveling by the electronic control unit when a specified initiation condition is established during traveling, during which the gear stage of the transmission is set and the clutch is engaged; terminating the execution of the coasting control by the electronic control unit when a specified termination condition is established during execution of the coasting control; determining, by the electronic control unit, whether a current travel state is a travel state where the clutch can be engaged based on a determination of whether an engine speed falls within a specified speed range when the clutch is engaged at a current gear stage of the transmission during the execution of the coasting control; prohibiting the engagement of the clutch by the electronic control unit when the electronic control unit determines that the current travel state is not the travel state where the clutch can be engaged during the execution of the coasting control; and executing slip control by the electronic control unit when the specified termination condition is established during the execution of the coasting control and an acceleration request is made through an operation of the accelerating operation member when the engagement of the clutch is prohibited.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view for explaining a schematic configuration of a vehicle, to which the invention is applied, and is also a view for explaining main sections of a control function and a control system for various types of control in the vehicle;
FIG. 2 is a chart of one example of a clutch engagement enabling region;
FIG. 3A is a flowchart for explaining main sections of control actuation of an electronic control unit, that is, the control actuation for transmitting power from an engine to drive wheels while suppressing a load imposed on the engine;
FIG. 3B is a flowchart for explaining main sections of control actuation of an electronic control unit, that is, the control actuation for transmitting power from an engine to drive wheels while suppressing a load imposed on the engine;
FIG. 4 is one example of a time chart in the case where the control actuation, which is indicated by the flowchart in FIGS. 3A and 3B, is executed, and shows a case of traveling at a low gear stage; and
FIG. 5 is one example of a time chart in the case where the control actuation, which is indicated by the flowchart in FIGS. 3A and 3B, is executed, and shows a case of traveling at a high gear stage.

### DETAILED DESCRIPTION OF EMBODIMENTS

A detailed description will hereinafter be made on an embodiment of the invention with reference to the drawings.

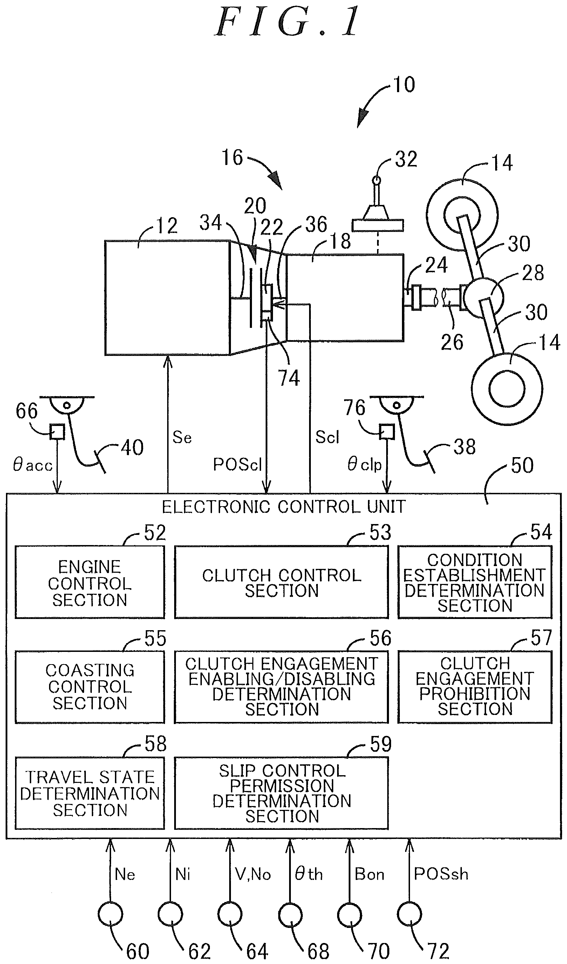

FIG. 1 is a view for explaining a schematic configuration of a vehicle 10, to which the invention is applied, and is also a view for explaining main sections of a control system for various types of control in the vehicle 10. In FIG. 1, the vehicle 10 includes an engine 12, drive wheels 14, and a power transmission apparatus 16 for a vehicle (hereinafter referred to as a power transmission apparatus 16) that is provided in a power transmission route between the engine 12 and the drive wheels 14. The power transmission apparatus 16 includes: a transmission 18 for constituting a part of the power transmission route between the engine 12 and the drive wheels 14; a clutch 20 for connecting/disconnecting the power transmission route between the engine 12 and the transmission 18; a clutch actuator 22 for switching among engagement, slipping, and disengagement of the clutch 20; a propeller shaft 26 coupled to a transmission output shaft 24 as an output rotary member of the transmission 18; a differential gear 28 coupled to the propeller shaft 26; a pair of axles 30 coupled to the differential gear 28; and the like. In the power transmission apparatus 16, power that is output from the engine 12 (torque and a force are defined the same unless otherwise distinguished) is transmitted to the drive wheels 14 sequentially via the clutch 20, the transmission 18, the propeller shaft 26, the differential gear 28, the axles 30, and the like.

The engine 12 is a drive power source of the vehicle 10 and is a known internal combustion engine such as a gasoline engine or a diesel engine. Engine torque Te of this engine 12 is controlled when operation states thereof, such as an intake air amount, a fuel supply amount, and ignition timing, are controlled by an electronic control unit 50, which will be described below.

The transmission 18 is, for example, a known manual transmission of a parallel shaft, constantly meshed type that includes plural pairs of transmission gears between two shafts, and each pair of the transmission gears constantly mesh with each other. In the transmission 18, any of a forward gear stage (for example, a fifth forward stage), a reverse gear stage (for example, a first reverse stage), and neutral is selectively established by a manual operation of a shift lever 32 that is provided near a driver's seat in the vehicle 10. Just as described, the transmission 18 is a transmission capable of switching the gear stage by the manual operation.

The clutch 20 is, for example, a known friction clutch of a dry single plate type. A release sleeve (not shown) thereof is moved when the clutch actuator 22 is driven by the electronic control unit 50, which will be described below. Then, an inner end of a diaphragm spring (not shown) is displaced, and an actuation state of the clutch 20 is thereby switched. In a state where the clutch actuator 22 does not move the release sleeve, the clutch 20 is engaged, and the power transmission route between the engine 12 and the transmission 18 is connected. On the contrary, when the clutch actuator 22 moves the release sleeve in the clutch 20, the release sleeve presses an inner circumferential end of the diaphragm spring. In conjunction with this, an urging force of the diaphragm spring is reduced, and torque capacity of the clutch 20 is also reduced. Then, once displacement of the release sleeve (that is, a clutch position POScl) reaches a specified amount, the clutch 20 is disengaged, and the power transmission route between the engine 12 and the transmission 18 is disconnected (blocked). Just as described, the clutch 20 is provided to be able to connect/disconnect the power transmission route between the engine 12 and the transmission 18 when the clutch actuator 22 switches the actuation state thereof. Note that the power transmission route is a power transmission route between a crankshaft 34 of the engine 12 and a transmission input shaft 36 as an input rotary member of the transmission 18.

In the clutch 20, the clutch actuator 22 is driven by the electronic control unit 50, which will be described below, on the basis of a clutch pedal operation amount θclp at a time when a clutch pedal 38, which is provided near the driver's seat in the vehicle 10, is depressed for an operation. The actuation state of the clutch 20 can thereby be switched. When the clutch pedal 38 is depressed, the clutch 20 slips or is disengaged. Then, once depression of the clutch pedal 38 is canceled, the clutch 20 is engaged. Alternatively, regardless of the operation of the clutch pedal 38, the actuation state of the clutch 20 can be switched when the clutch actuator 22 is driven by the electronic control unit 50. For example, even in the case where the clutch pedal 38 is not depressed, the clutch 20 can slip or be disengaged when the clutch actuator 22 moves the release sleeve. The clutch actuator 22 is of an electric type or a hydraulic type. In accordance with the displacement (that is, the clutch position POScl) of the release sleeve, which is changed by actuation of the clutch actuator 22, the torque capacity of the clutch 20 is controlled. Note that a state where the clutch 20 slips is a state where differential rotation of the clutch 20 is generated while the clutch 20 is engaged.

The vehicle 10 includes the electronic control unit 50 that includes a controller of the power transmission apparatus 16, and the controller is associated with switching control of the actuation state of the clutch 20 and the like, for example. Accordingly, FIG. 1 is a view of an input/output system of the electronic control unit 50. FIG. 1 is further a functional block diagram for explaining main sections of a control function of the electronic control unit 50. The electronic control unit 50 is configured by including a so-called microcomputer that includes a CPU, a RAM, a ROM, input/output interfaces, and the like, for example. The CPU processes signals in accordance with a program, which is stored in the ROM in advance, while using a temporary storage function of the RAM, and thereby executes various types of control for the vehicle 10. For example, the electronic control unit 50 executes output control of the engine 12, the switching control of the clutch 20, and the like, and is configured by being divided for the engine output control, the clutch control, and the like upon necessary.

The electronic control unit 50 is supplied with various actual values that are based on detection signals detected by various sensors provided in the vehicle 10. The various sensors include an engine speed sensor 60, an input rotational speed sensor 62, an output rotational speed sensor 64, an accelerator pedal operation amount sensor 66, a throttle valve opening degree sensor 68, a brake switch 70, a shift position sensor 72, a clutch position sensor 74, a clutch pedal sensor 76, and the like, for example. The various actual values include: an engine speed Ne; a transmission input rotational speed Ni as a rotational speed of the transmission input shaft 36, which corresponds to a vehicle speed V; a transmission output rotational speed No as a rotational speed of the transmission output shaft 24; an accelerator pedal operation amount θacc as an operation amount of an accelerator pedal 40, which is an accelerating operation member provided near the driver's seat in the vehicle 10; a throttle valve opening degree θth as an opening degree of an electronic throttle valve; brake-on Bon as a signal indicative of a brake operation state where a driver operates a brake pedal to actuate wheel brakes; a shift position POSsh as a signal indicative of an operation position of the shift lever 32; the clutch position POScl as the displacement of the clutch 20; the clutch pedal operation amount θclp as an operation amount (a depression amount) at a time when the driver depresses the clutch pedal 38 for the operation; and the like, for example. Meanwhile, the electronic control unit 50 outputs an engine output control command signal Se for the output control of the engine 12, a clutch control command signal Scl for the switching control of the actuation state of the clutch 20, and the like. This clutch control command signal Scl is a command signal used to move the release sleeve, which switches the actuation state of the clutch 20, to the clutch position POScl as a target, and is output to the clutch actuator 22.

In order to realize the control function for the various types of the control for the vehicle 10, the electronic control unit 50 includes engine control means, that is, an engine control section 52, clutch control means, that is, a clutch control section 53, condition establishment determination means, that is, a condition establishment determination section 54, and coasting control means, that is, a coasting control section 55.

The engine control section 52 applies the accelerator pedal operation amount θacc to a relationship that is computed in an experiment or design and stored in advance (that is, predetermined) (for example, a throttle valve opening degree map), and thereby computes a target throttle valve opening degree θthtgt. The engine control section 52 executes the output control of the engine 12 by driving a throttle actuator so as to obtain the target throttle valve opening degree θthtgt and by outputting the engine output control command signal Se, which is used to actuate a fuel injector in accordance with the intake air amount and the like.

The clutch control section 53 outputs the clutch control command signal Scl, which is used to switch the actuation state of the clutch 20 by the clutch actuator 22. More specifically, the clutch control section 53 can switch the actuation state of the clutch 20 by the clutch actuator 22 based on the operation of the clutch pedal 38. For example, the clutch control section 53 outputs the clutch control command signal Scl to the clutch actuator 22 in accordance with the clutch pedal operation amount θclp. The clutch control command signal Scl is a signal used to control the clutch position POScl in such a manner as to bring the actuation state of the clutch 20 into any state of engagement, slipping, and disengagement. In addition, the clutch control section 53 can switch the actuation state of the clutch 20 by the clutch actuator 22 regardless of the operation of the clutch pedal 38. For example, in the cases where the clutch pedal operation amount θclp is zero and the coasting control section 55 executes coasting control, the clutch control section 53 outputs the clutch control command signal Scl, which is used to control the clutch position POScl, to the clutch actuator 22, so as to disengage the clutch 20.

The condition establishment determination section 54 determines whether a specified initiation condition, which is defined in advance to initiate the coasting control by the coasting control section 55, is established during traveling, during which the gear stage of the transmission 18 is set and the clutch 20 is engaged. The condition establishment determination section 54 also determines whether a specified termination condition, which is defined in advance to terminate the coasting control, is established during execution of the coasting control by the coasting control section 55.

The coasting control is control for causing coasting, in which the vehicle travels with the clutch 20 being disengaged, when the vehicle becomes in such a travel state that an engine brake is actuated during traveling, during which the gear stage of the transmission 18 is set. The specified initiation condition is a travel state where the engine brake is actuated, and is, for example, a travel state where none of the accelerator pedal 40, the brake pedal, and the clutch pedal 38 is depressed for the operation and thus is in an off state. In other words, the specified initiation condition is a travel state where the accelerator pedal operation amount θacc is zero, the brake-on Bon signal is not output, and the clutch pedal operation amount θclp is zero. Meanwhile, the specified termination condition is a travel state where the specified initiation condition is not satisfied, and is, for example, a travel state where at least one pedal of the accelerator pedal 40, the brake pedal, and the clutch pedal 38 is depressed for the operation and thus is in an on state. In other words, the specified termination condition is a travel state where at least one of accelerator pedal on (or accelerator on) in which the accelerator pedal operation amount θacc is not zero, the brake-on Bon signal being output, and clutch pedal on in which the clutch pedal operation amount θclp is not zero is established.

The coasting control section 55 outputs a command for disengaging the clutch 20 to the clutch control section 53 and executes the coasting control when the condition establishment determination section 54 determines that the specified initiation condition is established during traveling, during which the gear stage of the transmission 18 is set and the clutch 20 is engaged. The coasting control section 55 also outputs a command for engaging the clutch 20 to the clutch control section 53 and terminates the execution of the coasting control when the condition establishment determination section 54 determines that the specified termination condition is established during the execution of the coasting control. Meanwhile, the coasting control section 55 continues the execution of the coasting control when the condition establishment determination section 54 does not determine that the specified termination condition is established during the execution of the coasting control. With the execution of this coasting control, a travel distance during deceleration traveling is extended, and fuel economy is improved when compared to a case where the engine brake is actuated. In the coasting control, an operation of the engine 12 may be stopped, or the engine 12 may be operated at an idle speed. However, in the case where the operation of the engine 12 is stopped during the coasting control, there is such an advantage that the fuel economy is improved. Meanwhile, in the case where the engine 12 is operated at the idle speed during the coasting control, there is such an advantage that the engine speed Ne is promptly increased when the coasting control is terminated.

Here, when the coasting control is terminated, the clutch 20 is engaged in a state where the gear stage of the transmission 18 is set. Thus, the engine speed Ne is restrained by the vehicle speed V. In other words, in the state where the gear stage of the transmission 18 is set, the transmission input rotational speed Ni is uniformly determined by a current gear ratio at the current gear stage and the transmission output rotational speed No that corresponds to the vehicle speed V. When the clutch 20 is engaged, the engine speed Ne corresponds to the transmission input rotational speed Ni. As it has been well known, the engine 12 is desirably operated such that the engine speed Ne falls within a specified speed range, which is predetermined and is a speed range where the engine speed Ne does not exceed a specified upper limit speed and does not fall below a specified lower limit speed. Thus, even in the case where the condition establishment determination section 54 determines that the specified termination condition is established during the execution of the coasting control, the electronic control unit 50 prohibits the engagement of the clutch 20 and continues the coasting control when the engagement of the clutch 20 at the current gear stage causes the engine speed Ne to fall out of the specified speed range. The specified upper limit speed is an upper limit value of the engine speed Ne (hereinafter referred to as a normal upper limit speed), at which the engine 12 can normally be used in terms of durability thereof, for example. The specified lower limit speed is a lower limit value of the engine speed Ne, at which a self-sustained operation of the engine 12 can appropriately be realized, for example, and a known idle speed.

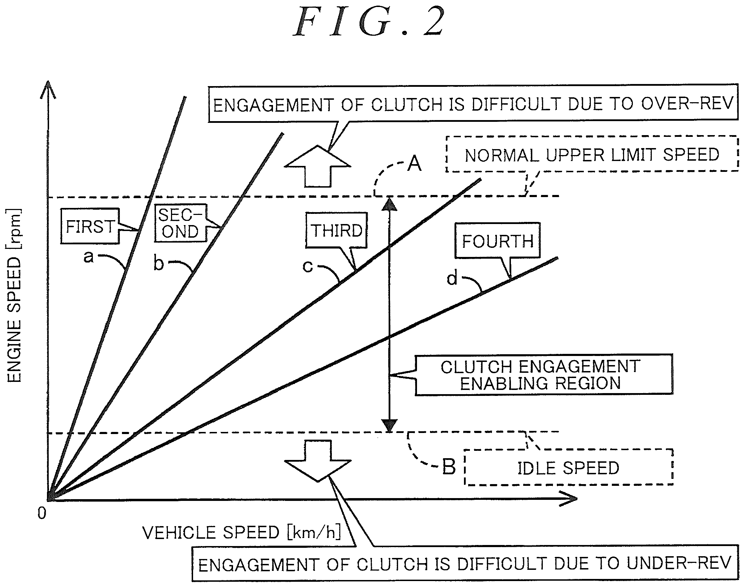

FIG. 2 is a chart of one example of an engagement enabling region of the clutch 20. In FIG. 2, a solid line a, a solid line b, a solid line c, and a solid line d respectively indicate relationships between the vehicle speed V and the engine speed Ne at times when the clutch 20 is engaged at first, second, third, and fourth gear stages of the transmission 18. The clutch 20 can be engaged in the case where the engine speed Ne falls within the clutch engagement enabling region, which is the specified speed range, when the clutch 20 is engaged for termination of the coasting control. The specified speed range is a range that does not exceed the normal upper limit speed (see a broken line A) and does not fall below the idle speed (see a broken line B). Thus, the electronic control unit 50 engages the clutch 20 for the termination of the coasting control in the case where the engine speed Ne falls within the clutch engagement enabling region when the clutch 20 is engaged. Meanwhile, in the case where the engine speed Ne falls within a region that exceeds the normal upper limit speed when the clutch 20 is engaged for the termination of the coasting control, the engine 12 over-revs. Thus, it is difficult to engage the clutch 20. For this reason, the electronic control unit 50 prohibits the engagement of the clutch 20 in the case where the engine 12 over-revs when the clutch 20 is engaged. As shown in FIG. 2, over-rev is likely to occur in a travel state at the low gear stage and the high vehicle speed. On the contrary, in the case where the engine speed Ne falls within a region that falls below the idle speed when the clutch 20 is engaged for the termination of the coasting control, the engine 12 under-revs. Thus, it is difficult to engage the clutch 20. For this reason, the electronic control unit 50 prohibits the engagement of the clutch 20 in the case where the engine 12 under-revs when the clutch 20 is engaged. As shown in FIG. 2, under-rev is likely to occur in a travel state at the high gear stage and the low vehicle speed.

As shown in FIG. 2, it is understood that the vehicle speed V, at which the clutch engagement enabling region is set, differs by the gear stages of the transmission 18. In other words, the vehicle speed V, at which the clutch engagement enabling region is set, can be switched when the gear stage of the transmission 18 is switched. However, the transmission 18 is a manual transmission. Thus, in the case where the engine speed Ne does not fall within the clutch engagement enabling region when the clutch 20 is engaged for the termination of the coasting control, the electronic control unit 50 cannot automatically switch the gear stage such that the engine speed Ne falls within the clutch engagement enabling region. For this reason, the electronic control unit 50 prohibits the engagement of the clutch 20 when the engine speed Ne does not fall within the clutch engagement enabling region.

By the way, the power of the engine 12 is not transmitted to the drive wheels 14 in the cases where the engagement of the clutch 20 is prohibited and the coasting control cannot be terminated when the specified termination condition for the coasting control is established by the accelerator on. Thus, travel performance (accelerating performance), which is requested in conjunction with the accelerator on, cannot be satisfied. Just as described, in the control for prohibiting the engagement of the clutch 20 and continuing the coasting control, the over-rev and the under-rev of the engine 12 can be prevented; however, drive power cannot be secured by corresponding to the accelerator on.

In view of the above, in the cases where the specified termination condition is established during the execution of the coasting control and where the acceleration request is made through an operation of the accelerator pedal 40 when the engagement of the clutch 20 is prohibited, the electronic control unit 50 executes the slip control. The slip control is control for setting the clutch position POScl to a position at which the clutch 20 transmits the power from the engine 12 (a slip position of the clutch 20), so as to produce a state where the clutch 20 slips. Due to this slip control of the clutch 20, even in the case where the coasting control cannot be terminated because the engagement of the clutch 20 is prohibited and when the specified termination condition of the coasting control is established by the accelerator on, the power from the engine 12 can be transmitted to the drive wheels 14, and the drive power is thereby secured. In this slip control of the clutch 20, the over-rev or the under-rev of the engine 12 can be suppressed when compared to the case where the clutch 20 is engaged. Preferably, the clutch 20 is subjected to the slip control so as to prevent the over-rev or the under-rev of the engine 12.

In order to realize the slip control of the clutch 20 during the coasting control, which has been described so far, the electronic control unit 50 further includes clutch engagement enabling/disabling determination means, that is, a clutch engagement enabling/disabling determination section 56, clutch engagement prohibition means, that is, a clutch engagement prohibition section 57, travel state determination means, that is, a travel state determination section 58, and slip control permission determination means, that is, a slip control permission determination section 59.

The clutch engagement enabling/disabling determination section 56 determines whether the engine speed Ne falls within the clutch engagement enabling region in the case where the clutch 20 is engaged at the current gear stage of the transmission 18 during the execution of the coasting control by the coasting control section 55. Then, based on this determination, the clutch engagement enabling/disabling determination section 56 determines whether the current travel state is a travel state where the clutch 20 can be engaged. More specifically, when the clutch 20 is engaged, the engine speed Ne matches the transmission input rotational speed Ni. Thus, based on whether the transmission input rotational speed Ni falls within the clutch engagement enabling region, the clutch engagement enabling/disabling determination section 56 determines whether the engine speed Ne falls within the clutch engagement enabling region in the case where the clutch 20 is engaged at the current gear stage of the transmission 18. In the case where the clutch engagement enabling/disabling determination section 56 determines that the engine speed Ne falls within the clutch engagement enabling region, the clutch engagement enabling/disabling determination section 56 determines that the current travel state is the travel state where the clutch 20 can be engaged. On the contrary, in the case where the clutch engagement enabling/disabling determination section 56 determines that the engine speed Ne does not fall within the clutch engagement enabling region, the clutch engagement enabling/disabling determination section 56 determines that the current travel state is not the travel state where the clutch 20 can be engaged. In the state where the gear stage of the transmission 18 is set, the transmission input rotational speed Ni is uniformly determined by the current gear ratio at the current gear stage and the transmission output rotational speed No that corresponds to the vehicle speed V. Thus, to determine whether the current travel state is the travel state where the clutch 20 can be engaged is to determine whether the vehicle 10 travels at the vehicle speed V at which the clutch 20 can be engaged at the current gear stage (see FIG. 2).

The condition establishment determination section 54 determines that the specified termination condition is established during the execution of the coasting control by the coasting control section 55. Furthermore, in the case where the clutch engagement enabling/disabling determination section 56 determines that the current travel state is the travel state where the clutch 20 can be engaged, the coasting control section 55 outputs the command for engaging the clutch 20 to the clutch control section 53 and terminates the execution of the coasting control (or the slip control).

In regard to the clutch engagement prohibition section 57, the condition establishment determination section 54 determines that the specified termination condition is established during the execution of the coasting control by the coasting control section 55. Furthermore, in the case where the clutch engagement enabling/disabling determination section 56 determines that the current travel state is not the travel state where the clutch 20 can be engaged, the clutch engagement prohibition section 57 outputs a command for prohibiting the engagement of the clutch 20 (that is, a command for prohibiting the termination of the coasting control) to the coasting control section 55.

The travel state determination section 58 determines whether the acceleration request is made through the operation of the accelerator pedal 40 when the clutch engagement prohibition section 57 prohibits the engagement of the clutch 20. In other words, the travel state determination section 58 determines whether the accelerator pedal 40 is on. The travel state determination section 58 also determines whether the slip control is executed by the coasting control section 55 when the clutch engagement prohibition section 57 prohibits the engagement of the clutch 20.

In the cases where the condition establishment determination section 54 determines that the specified termination condition is established during the execution of the coasting control and where the travel state determination section 58 determines that the accelerator pedal 40 is on when the clutch engagement prohibition section 57 prohibits the engagement of the clutch 20, the coasting control section 55 executes the slip control. The coasting control section 55 executes the slip control by controlling the clutch position POScl by the clutch actuator 22 such that the engine speed Ne falls within the clutch engagement enabling region. The coasting control section 55 executes the slip control such that the engine speed Ne does not exceed the normal upper limit speed and does not fall below the idle speed (that is, such that the engine 12 neither over-rev nor under-rev).

In the case where the engine 12 over-revs when the clutch 20 is engaged at the current gear stage of the transmission 18, the engine speed Ne approaches the normal upper limit speed as the clutch position POScl moves to an engagement side of the clutch 20. On the contrary, as the clutch position POScl moves to a disengagement side of the clutch 20, the engine speed Ne approaches the idle speed. In the slip control of such a case, the clutch position POScl initially moves to the engagement side of the clutch 20 at a specified speed from a control initiation time point, so as to increase the engine speed Ne. Once the engine speed Ne reaches a clutch disengagement threshold speed (during the over-rev), the clutch position POScl moves to the disengagement side of the clutch 20 at the specified speed, so as to reduce the engine speed Ne. The clutch disengagement threshold speed (during the over-rev) is a threshold that is predetermined to be a lower speed than the normal upper limit speed by a specified surplus speed. Once the engine speed Ne reaches a clutch engagement threshold speed (during the over-rev), the clutch position POScl moves to the engagement side of the clutch 20 at the specified speed, so as to increase the engine speed Ne. The clutch engagement threshold speed (during the over-rev) is a threshold that is predetermined to be a lower speed than the clutch disengagement threshold speed by specified speed width. By repeating such movement of the clutch position POScl, the clutch 20 slips such that the engine speed Ne fluctuates in the specified speed width within the clutch engagement enabling region.

Meanwhile, in the case where the engine 12 under-revs when the clutch 20 is engaged at the current gear stage of the transmission 18, the engine speed Ne approaches the idle speed as the clutch position POScl moves to the engagement side of the clutch 20. In addition, in a state where the engine torque Te that corresponds to the accelerator pedal operation amount θacc is generated, the engine speed Ne approaches the normal upper limit speed as the clutch position POScl moves to the disengagement side of the clutch 20. In the slip control of such a case, prior to the initiation of the control (that is, in a state where the clutch 20 is disengaged), the engine speed Ne is initially increased in accordance with the accelerator pedal operation amount θacc. Then, the clutch position POScl moves to the engagement side of the clutch 20 at the specified speed from the control initiation time point, so as to reduce the engine speed Ne. Once the engine speed Ne reaches the clutch disengagement threshold speed (during the under-rev), the clutch position POScl moves to the disengagement side of the clutch 20 at the specified speed, so as to increase the engine speed Ne. Once the engine speed Ne reaches the clutch engagement threshold speed (during the under-rev), the clutch position POScl moves to the engagement side of the clutch 20 at the specified speed, so as to reduce the engine speed Ne. The clutch engagement threshold speed (during the under-rev) is a threshold that is predetermined to be a lower speed than the normal upper limit speed by a specified surplus speed. By repeating such movement of the clutch position POScl, the clutch 20 slips such that the engine speed Ne fluctuates in specified speed width within the clutch engagement enabling region. Note that the clutch disengagement threshold speed (during the under-rev) is a threshold that is predetermined to be a lower speed than the clutch engagement threshold speed (during the under-rev) by the specified speed width. The clutch disengagement threshold speed (during the under-rev) is a threshold that corresponds to the clutch engagement threshold speed (during the over-rev), may be the same value as the clutch engagement threshold speed (during the over-rev), or may be a different value therefrom. The clutch engagement threshold speed (during the under-rev) is a threshold that corresponds to the clutch disengagement threshold speed (during the over-rev), may be the same value as the clutch disengagement threshold speed (during the over-rev), or may be a different value therefrom.

The clutch 20 is heated in conjunction with slipping of the clutch 20. Thus, in order to protect the clutch 20, the execution of the slip control by the coasting control section 55 is desirably permitted after a lapse of a certain time period from the termination of the last slip control. In addition, in order to protect the clutch 20, duration of the slip control by the coasting control section 55 for each control is desirably restricted.

For the above reason, in the case where the travel state determination section 58 determines that the coasting control section 55 does not execute the slip control, the slip control permission determination section 59 determines whether an elapsed time period from the termination of the last slip control by the coasting control section 55 is at least equal to a specified elapsed time period. In addition, in the case where the travel state determination section 58 determines that the coasting control section 55 currently executes the slip control, the slip control permission determination section 59 determines whether the duration of the currently executed slip control is shorter than specified duration. Each of the specified elapsed time period and the specified duration is a slip control permission determination threshold that is predetermined as a time period after/during which the execution of the slip control can be permitted in terms of durability of the clutch 20.

In the cases where the travel state determination section 58 determines that the slip control is not currently executed and where the slip control permission determination section 59 determines that the elapsed time period from the termination of the last slip control is at least equal to the specified elapsed time period, the coasting control section 55 executes the slip control. In addition, in the cases where the travel state determination section 58 determines that the slip control is currently executed and where the slip control permission determination section 59 determines that the duration of the currently executed slip control is shorter than the specified duration, the coasting control section 55 continues executing the slip control.

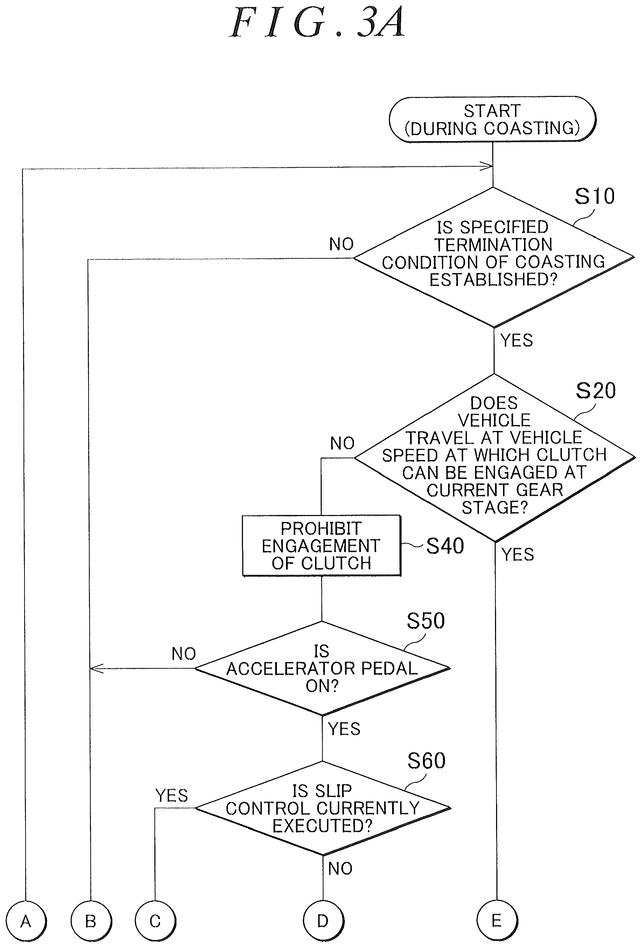

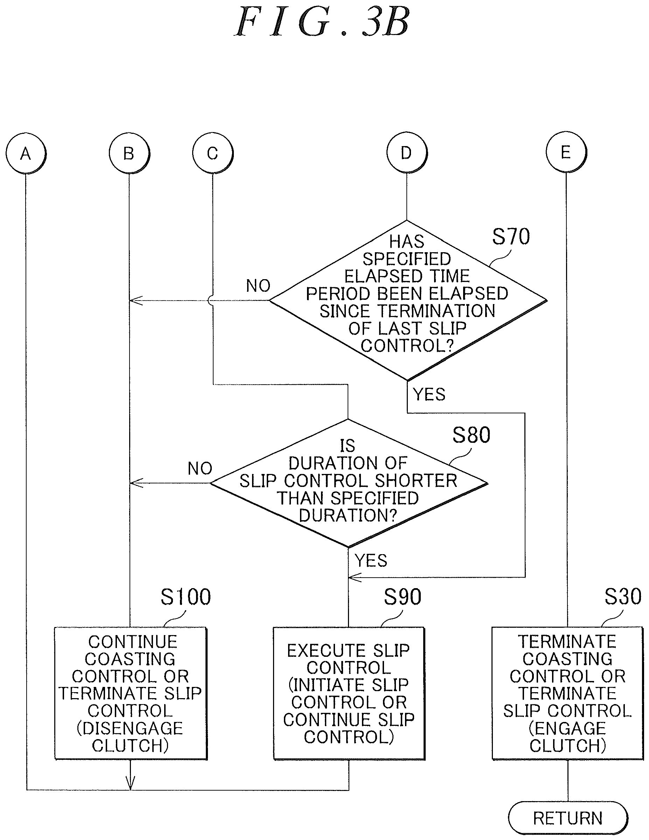

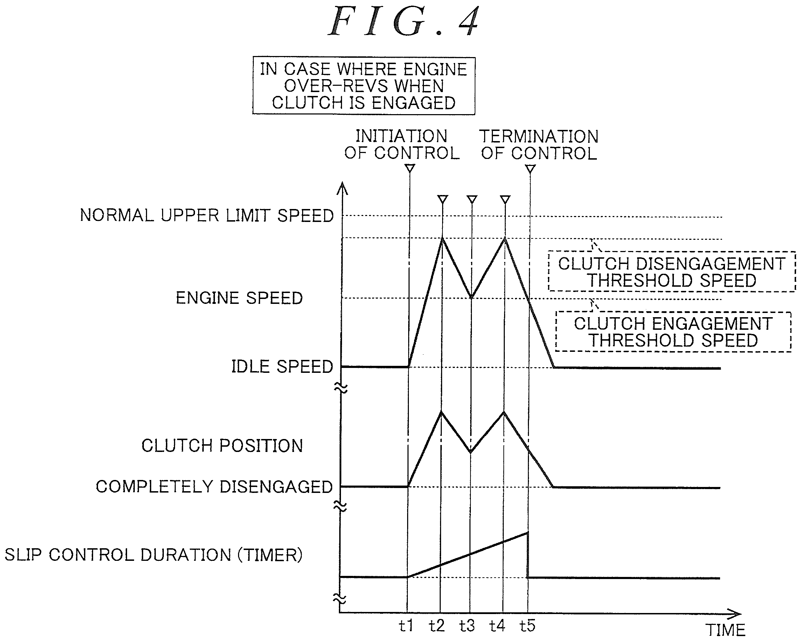

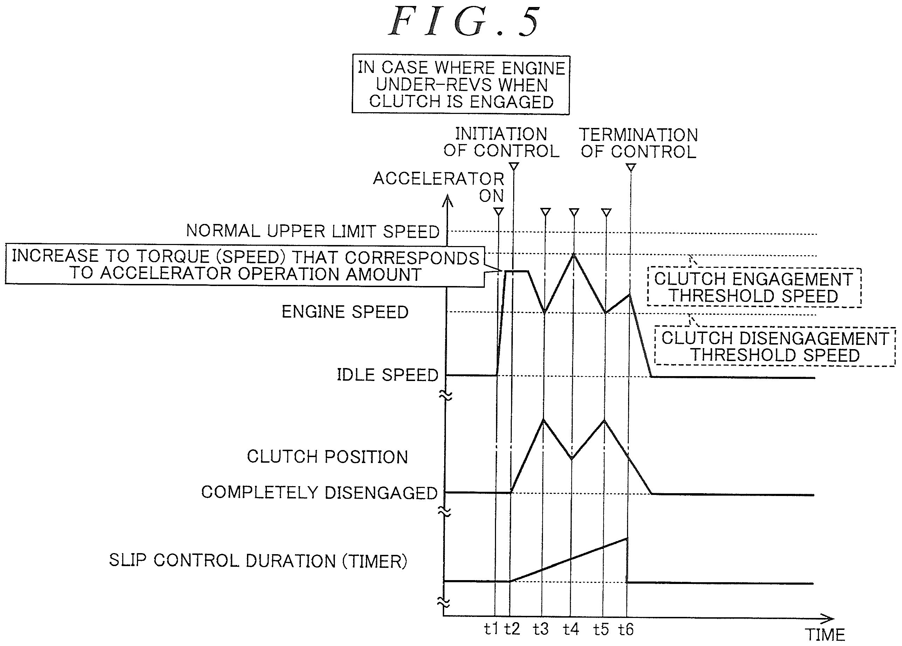

FIGS. 3A and 3B are a flowchart for explaining main sections of control actuation of the electronic control unit 50, that is, the control actuation for transmitting the power from the engine 12 to the drive wheels 14 while suppressing a load imposed on the engine 12. For example, the above flowchart is repeatedly executed during coasting of the vehicle, in which the coasting control is executed. FIG. 4 and FIG. 5 are each one example of a time chart in the case where the control actuation, which is indicated by the flowchart in FIGS. 3A and 3B, is executed. FIG. 4 shows a case of traveling at the low gear stage and at the high vehicle speed, and shows one example in the case where the engine 12 over-revs when the clutch 20 is engaged. FIG. 5 shows a case of traveling at the high gear stage and at the low vehicle speed, and shows one example in the case where the engine 12 under-revs when the clutch 20 is engaged.

In FIGS. 3A and 3B, initially in step (hereinafter step is omitted) S10 that corresponds to a function of the condition establishment determination section 54, it is determined whether the specified termination condition for terminating the coasting control is established. If the determination of this S10 is positive, it is determined in S20 that corresponds to a function of the clutch engagement enabling/disabling determination section 56 whether the current travel state is the travel state where the clutch 20 can be engaged. In other words, it is determined whether the vehicle 10 travels at the vehicle speed V at which the clutch 20 can be engaged at the current gear stage. If the determination of this S20 is positive, the command for engaging the clutch 20 is output in S30 that corresponds to a function of the coasting control section 55. Then, the coasting control is terminated, or the slip control is terminated. If the determination of above S20 is negative, the command for prohibiting the engagement of the clutch 20 is output in S40 that corresponds to a function of the clutch engagement prohibition section 57. Next, it is determined in S50 that corresponds to a function of the travel state determination section 58 whether the accelerator pedal 40 is on. If the determination of this S50 is positive, it is determined in S60 that corresponds to the function of the travel state determination section 58 whether the slip control is currently executed. If the determination of this S60 is negative, it is determined in S70 that corresponds to a function of the slip control permission determination section 59 whether the elapsed time period from the termination of the last slip control is at least equal to the specified elapsed time period. If the determination of above S60 is positive, it is determined in S80 that corresponds to the function of the slip control permission determination section 59 whether the duration of the slip control is shorter than the specified duration. If the determination of above S70 is positive, or if the determination of above S80 is positive, the command for causing slipping of the clutch 20 is output in S90 that corresponds to the function of the coasting control section 55. Then, the slip control is executed. In other words, the slip control is initiated or continued. If the determination of above S10 is negative, if the determination of above S50 is negative, if the determination of above S70 is negative, or if the determination of above S80 is negative, the command for disengaging the clutch 20 is output in S100 that corresponds to the function of the coasting control section 55. Then, the coasting control is continued, or the slip control is terminated. Following above S90 or following above S100, the process returns to above S10.

In FIG. 4, a time point t1 indicates a time point at which the slip control is initiated in conjunction with the accelerator on while the coasting control is executed. FIG. 4 shows the case where the engine 12 over-revs due to the relatively high vehicle speed V when the clutch 20 is engaged, for example. Thus, when the slip control is initiated and the clutch position POScl moves to the engagement side of the clutch 20, the engine speed Ne is increased (see the time point t1 to a time point t2). Once the engine speed Ne reaches the clutch disengagement threshold speed (during the over-rev) (see the time point t2), the clutch position POScl moves to the disengagement side of the clutch 20. Then, the engine speed Ne is reduced (see the time point t2 to a time point t3). Once the engine speed Ne reaches the clutch engagement threshold speed (during the over-rev) (see the time point t3), the clutch position POScl again moves to the engagement side of the clutch 20. Then, the engine speed Ne is increased (see the time point t3 to a time point t4). The clutch position POScl is controlled just as described. In this way, the clutch 20 slips such that the engine speed Ne does not exceed the normal upper limit speed and does not fall below the idle speed. Then, when the duration (a timer) of the slip control exceeds the specified duration, the slip control is terminated (see a time point t5), and the coasting control is executed again (see the time point t5 onward). The torque Te that corresponds to the accelerator pedal operation amount θacc is generated during the slip control. However, when the coasting control is resumed, the engine speed Ne is maintained at the idle speed through control of the electronic throttle valve and the like (see the time point t5 onward). Note that, in the case where the vehicle speed V, at which the clutch 20 can be engaged at the current gear stage, is obtained before the duration of the slip control exceeds the specified duration, the clutch 20 is engaged. Then, the slip control is terminated, and the coasting control is also terminated.

In FIG. 5, a time point t1 indicates a time point at which the accelerator is on while the coasting control is executed. FIG. 5 shows the case where the engine 12 under-revs due to the relatively low vehicle speed V when the clutch 20 is engaged, for example. For this reason, possible occurrence of engine stalling is concerned. Thus, prior to the initiation of the slip control, prescribed torque that corresponds to the accelerator pedal operation amount θacc is generated, and the engine speed Ne is increased to be higher than the idle speed (see the time point t1 onward). Then, the slip control is initiated in a state where the engine speed Ne is increased (see a time point t2). When the slip control is initiated and the clutch position POScl moves to the engagement side of the clutch 20, the engine speed Ne is reduced (see the time point t2 to a time point t3). Once the engine speed Ne reaches the clutch disengagement threshold speed (during the under-rev) (see the time point t3), the clutch position POScl moves to the disengagement side of the clutch 20. Then, the engine speed Ne is increased (see the time point t3 to a time point t4). Once the engine speed Ne reaches the clutch engagement threshold speed (during the under-rev) (see the time point t4), the clutch position POScl again moves to the engagement side of the clutch 20. Then, the engine speed Ne is reduced (see the time point t4 to a time point t5). The clutch position POScl is controlled just as described. In this way, the clutch 20 slips such that the engine speed Ne does not exceed the normal upper limit speed and does not fall below the idle speed. Then, when the duration (the timer) of the slip control exceeds the specified duration, the slip control is terminated (see a time point t6), and the coasting control is executed again (see the time point t6 onward). The prescribed torque that corresponds to the accelerator pedal operation amount θacc is generated until the slip control is terminated. However, when the slip control is terminated, the engine speed Ne is maintained at the idle speed through the control of the electronic throttle valve and the like (see the time point t6 onward). Note that, in the case where the vehicle speed V, at which the clutch 20 can be engaged at the current gear stage, is obtained before the duration of the slip control exceeds the specified duration, the clutch 20 is engaged. Then, the slip control is terminated, and the coasting control is also terminated.

As described above, according to this embodiment, in the cases where the specified termination condition is established during the execution of the coasting control and where the acceleration request is made through the operation of the accelerator pedal 40 when the engagement of the clutch 20 is prohibited, the slip control of the clutch 20 is executed. Thus, the clutch 20 can transmit the power from the engine 12. In addition, compared to the case where the clutch 20 is engaged, the engine speed Ne is suppressed from falling out of the clutch engagement enabling region, or the engine speed Ne falls within the clutch engagement enabling region. Therefore, the power from the engine 12 can be transmitted to the drive wheels 14 while the load imposed on the engine 12 is suppressed. Note that the engagement of the clutch 20 is prohibited because the engine speed Ne falls out of the clutch engagement enabling region with the engagement of the clutch 20.

According to this embodiment, the slip control of the clutch 20 is executed such that the engine speed Ne falls within the speed range that does not exceed the normal upper limit speed and does not fall below the idle speed. Thus, the load imposed on the engine 12 can appropriately be suppressed, and a shock that occurs when the clutch 20 is brought into a slipping state can be suppressed.

According to this embodiment, the current slip control of the clutch 20 is executed in the case where the elapsed time period from the last slip control of the clutch 20 is at least equal to the specified elapsed time period. Thus, the clutch 20 can be protected from heating of the clutch 20 that is associated with the slip control.

According to this embodiment, the slip control is continued in the case where the duration of the slip control of the clutch 20 is shorter than the specified duration. In this way, the clutch 20 can be protected from the heating caused by the slip control.

The embodiment of the invention has been described in detail so far on the basis of the drawings. However, the invention is also applied to other aspects.

For example, the clutch pedal 38 is provided in the above-described embodiment; however, the aspect is not limited thereto. For example, a switch is provided on the shift lever 32, and it is configured to switch the gear stage of the transmission 18 by operating the shift lever 32 with the switch being pressed. In such a case, the clutch pedal 38 is not provided, and the clutch 20 may be actuated by the clutch actuator 22 when pressing of this switch is detected.

In the above-described embodiment, the transmission 18 was the known manual transmission of the parallel shaft, constantly meshed type. However, the invention is not limited to this aspect. For example, the transmission may be a known transmission of the parallel shaft, constantly meshed type and may be an automatic transmission whose gear stage is switched when engagement or disengagement of a meshing-type clutch is controlled by an actuator. That is, as long as the automatic transmission is the transmission whose gear stage can be switched by the manual operation, the invention can be applied thereto. Note that, in the case where the engine speed Ne does not fall within the clutch engagement enabling region when the clutch 20 is engaged, the gear stage of the automatic transmission can automatically be switched such that the engine speed Ne falls within the clutch engagement enabling region. However, the drive power may promptly be generated when the clutch 20 is subjected to the slip control in comparison with a case where the gear stage is switched and the clutch 20 is engaged when the engine speed Ne does not fall within the clutch engagement enabling region. In such a case, implementation of the invention in the automatic transmission is advantageous.

In the above-described embodiment, the engine 12 is exemplified as the drive power source. This drive power source can be adopted by combining another motor, such as an electric motor, with the engine 12. In addition, the accelerator pedal 40 is exemplified as the accelerating operation member. However, the accelerating operation member may be a lever switch or a rotary switch that is manually operated. Furthermore, the clutch 20 is the friction clutch of the dry single plate type. However, the clutch 20 may be a friction clutch of a wet single plate type or may be a friction clutch of wet multi-plate type.

Note that what has been described above is merely one embodiment and the invention (which is defined by the claims) can be implemented in aspects in which various modifications or improvements are made to the invention based on knowledge of a person skilled in the art, within the scope of the claims.

## Claims

1. A controller for a vehicle including an engine (12), drive wheels (14), an accelerating operation member (40), a transmission (18) constituting a part of a power transmission route between the engine (12) and the drive wheels (14), the transmission (18) being configured to switch a gear stage by a manual operation, a clutch (20) configured to connect and disconnect the power transmission route between the engine (12) and the transmission (18), and a clutch actuator (22) configured to switch among engagement, slipping, and disengagement of the clutch (20),
the controller comprising
an electronic control unit (50) configured to:
switch an actuation state of the clutch (20) by the clutch actuator (22);
execute coasting control for disengaging the clutch (20) for traveling when a specified initiation condition is established during traveling, during which the gear stage of the transmission (18) is set and the clutch (20) is engaged; and
terminate the execution of the coasting control when a specified termination condition is established during execution of the coasting control;
**characterised in that** the electronic control unit (50) is configured to determine whether a current travel state is a travel state where the clutch (20) can be engaged based on a determination of whether an engine speed falls within a specified speed range when the clutch (20) is engaged at a current gear stage of the transmission (18) during the execution of the coasting control;
prohibit the engagement of the clutch (20) when the electronic control unit (50) determines that the current travel state is not the travel state where the clutch (20) can be engaged during the execution of the coasting control; and
execute slip control, being control in which the clutch (20) transmits power from the engine (12) as a state where the clutch (20) slips, when the specified termination condition is established during the execution of the coasting control and an acceleration request is made through an operation of the accelerating operation member (40) when the engagement of the clutch (20) is prohibited.

2. The controller according to claim 1, wherein
the electronic control unit (50) is configured to execute the slip control by controlling displacement of the clutch (20) by the clutch actuator (22) such that the engine speed falls within the specified speed range,
the specified speed range is a speed range where the engine speed does not exceed a specified upper limit speed and does not fall below a specified lower limit speed.

3. The controller according to claim 1 or 2, wherein
the electronic control unit (50) is configured to
determine whether an elapsed time period from termination of the last slip control is at least equal to a specified elapsed time period, and the electronic control unit (50) is configured to execute the slip control when the electronic control unit (50) determines that the elapsed time period is at least equal to the specified elapsed time period.

4. The controller according to any one of claims 1 to 3, wherein
the electronic control unit (50) is configured to determine whether duration of the slip control is shorter than specified duration, and the electronic control unit (50) is configured to continue the slip control when the electronic control unit (50) determines during the slip control that the duration is shorter than the specified duration.

5. A control method for a vehicle including an engine (12), drive wheels (14), an accelerating operation member (40), a transmission (18) constituting a part of a power transmission route between the engine (12) and the drive wheels (14), the transmission (18) being configured to switch a gear stage by a manual operation, a clutch (20) configured to connect and disconnect the power transmission route between the engine (12) and the transmission (18), a clutch actuator (22) configured to switch among engagement, slipping, and disengagement of the clutch (20), and an electronic control unit (50) configured to switch an actuation state of the clutch (20) by the clutch actuator (22),
the control method comprising:
executing coasting control for disengaging the clutch (20) for traveling by the electronic control unit (50) when a specified initiation condition is established during traveling, during which the gear stage of the transmission (18) is set and the clutch (20) is engaged; and
terminating the execution of the coasting control by the electronic control unit (50) when a specified termination condition is established during execution of the coasting control;
**characterised by** determining, by the electronic control unit (50), whether a current travel state is a travel state where the clutch (20) can be engaged based on a determination of whether an engine speed falls within a specified speed range when the clutch (20) is engaged at a current gear stage of the transmission (18) during the execution of the coasting control;
prohibiting the engagement of the clutch (20) by the electronic control unit (50) when the electronic control unit (50) determines that the current travel state is not the travel state where the clutch (20) can be engaged during the execution of the coasting control; and
executing slip control by the electronic control unit (50) when the specified termination condition is established during the execution of the coasting control and an acceleration request is made through an operation of the accelerating operation member (40) when the engagement of the clutch (20) is prohibited.

6. The control method according to claim 5, further comprising
executing the slip control by the electronic control unit (50) by controlling displacement of the clutch (20) by the clutch actuator (22) such that the engine speed falls within the specified speed range,
the specified speed range being a speed range where the engine speed does not exceed a specified upper limit speed and does not fall below a specified lower limit speed.

7. The control method according to claim 5 or 6, further comprising:
determining, by the electronic control unit (50), whether an elapsed time period from termination of the last slip control is at least equal to a specified elapsed time period; and
executing the slip control by the electronic control unit (50) when the electronic control unit (50) determines that the elapsed time period is at least equal to the specified elapsed time period.

8. The control method according to any one of claims 5 to 7, further comprising:
determining, by the electronic control unit (50), whether duration of the slip control is shorter than specified duration; and
continuing the slip control by the electronic control unit (50) when the electronic control unit (50) determines during the slip control that the duration is shorter than the specified duration.

## Patentansprüche

1. Steuerung für ein Fahrzeug, enthaltend einen Motor (12), Antriebsräder (14), ein Beschleunigungsbetätigungselement (40), ein Getriebe (18), das einen Teil eines Stromübertragungswegs zwischen dem Motor (12) und den Antriebsrädern (14) bildet, wobei das Getriebe (18) konfiguriert ist, eine Getriebestufe durch eine manuelle Betätigung umzuschalten, eine Kupplung (20) konfiguriert ist, den Stromübertragungsweg zwischen dem Motor (12) und dem Getriebe (18) zu verbinden und zu trennen, und ein Kupplungsaktuator (22) konfiguriert ist, zwischen Einrücken, Rutschen lassen und Ausrücken der Kupplung (20) umzuschalten,
wobei die Steuerung umfasst,
eine elektronische Steuereinheit (50), die zu Folgendem konfiguriert ist:
Umschalten eines Bestätigungszustands der Kupplung (20) durch den Kupplungsaktuator (22);
Ausführen einer Schubbetriebsteuerung zum Ausrücken der Kupplung (20), um zu fahren, wenn ein festgelegter Einleitungszustand während des Fahrens gewährleistet ist, währenddessen die Getriebestufe des Getriebes (18) festgelegt ist und die Kupplung (20) in Eingriff ist; und
Beenden der Ausführung der Schubbetriebsteuerung, wenn eine festgelegte Beendigungsbedingung während der Ausführung der Schubbetriebsteuerung gewährleistet ist;
**dadurch gekennzeichnet, dass** die elektronische Steuereinheit (50) konfiguriert ist, zu bestimmen, ob ein aktueller Fahrzustand ein Fahrzustand ist, in dem die Kupplung (20) auf der Grundlage einer Bestimmung, ob eine Motordrehzahl in einen festgelegten Drehzahlbereich fällt, wenn die Kupplung (20) in Eingriff in einer aktuellen Getriebestufe des Getriebes (18) während der Ausführung der Schubbetriebsteuerung ist, in Eingriff gebracht werden kann;
Verhindern des Eingreifens der Kupplung (20), wenn die elektronische Steuereinheit (50) bestimmt, dass der aktuelle Fahrzustand nicht der Fahrzustand ist, in dem die Kupplung (20) während der Ausführung der Schubbetriebsteuerung in Eingriff gebracht werden kann; und
Ausführen einer Schlupfsteuerung, die eine Steuerung ist, in der die Kupplung (20) Strom von dem Motor (12) als einen Zustand überträgt, in dem die Kupplung (20) rutscht,
wenn die festgelegte Beendigungsbedingung während der Ausführung der Schubbetriebsteuerung gewährleistet ist und eine Beschleunigungsanforderung durch einen Betrieb des Beschleunigungsbetätigungselements (40) gemacht wird, wenn das Eingreifen der Kupplung (20) verhindert wird.

2. Steuerung nach Anspruch 1, wobei
die elektronische Steuereinheit (50) konfiguriert ist, die Schlupfsteuerung durch Steuern der Verlagerung der Kupplung (20) durch den Kupplungsaktuator (22) auszuführen, sodass die Motordrehzahl in den festgelegten Drehzahlbereich fällt,
der festgelegte Drehzahlbereich ein Drehzahlbereich ist, in dem die Motordrehzahl eine festgelegte obere Grenzdrehzahl nicht überschreitet und nicht unter eine festgelegte untere Grenzdrehzahl fällt.

3. Steuerung nach Anspruch 1 oder 2, wobei
die elektronische Steuereinheit (50) konfiguriert ist,
zu bestimmen, ob ein verstrichener Zeitraum von Beendigung der letzten Schlupfsteuerung mindestens gleich einem festgelegten verstrichenen Zeitraum ist, und die elektronische Steuereinheit (50) konfiguriert ist, die Schlupfsteuerung auszuführen, wenn die elektronische Steuereinheit (50) bestimmt, dass der verstrichene Zeitraum mindestens gleich dem festgelegten verstrichenen Zeitraum ist.

4. Steuerung nach einem der Ansprüche 1 bis 3, wobei
die elektronische Steuereinheit (50) konfiguriert ist, zu bestimmen, ob die Dauer der Schlupfsteuerung kürzer als eine festgelegte Dauer ist, und die elektronische Steuereinheit (50) konfiguriert ist, die Schlupfsteuerung fortzusetzen, wenn die elektronische Steuereinheit (50) während der Schlupfsteuerung bestimmt, dass die Dauer kürzer als die festgelegte Dauer ist.

5. Steuerverfahren für ein Fahrzeug, enthaltend einen Motor (12), Antriebsräder (14), ein Beschleunigungsbetätigungselement (40), ein Getriebe (18), das einen Teil eines Stromübertragungswegs zwischen dem Motor (12) und den Antriebsrädern (14) bildet, wobei das Getriebe (18) konfiguriert ist, eine Getriebestufe durch eine manuelle Betätigung umzuschalten, eine Kupplung (20) konfiguriert ist, den Stromübertragungsweg zwischen dem Motor (12) und dem Getriebe (18) zu verbinden und zu trennen, und ein Kupplungsaktuator (22) konfiguriert ist, zwischen Einrücken, Rutschen lassen und Ausrücken der Kupplung (20) umzuschalten, und eine elektronische Steuereinheit (50) konfiguriert ist, einen Bestätigungszustand der Kupplung (20) durch den Kupplungsaktuator (22) umzuschalten,
wobei das Steuerverfahren Folgendes umfasst:
Ausführen einer Schubbetriebsteuerung zum Ausrücken der Kupplung (20) zum Fahren durch die elektronische Steuereinheit (50), wenn ein festgelegter Einleitungszustand während des Fahrens eingerichtet ist, währenddessen die Getriebestufe des Getriebes (18) festgelegt ist und die Kupplung (20) in Eingriff ist; und
Beenden der Ausführung der Schubbetriebsteuerung durch die elektronische Steuereinheit (50), wenn eine festgelegte Beendigungsbedingung während der Ausführung der Schubbetriebsteuerung eingerichtet ist;
**gekennzeichnet durch** Bestimmen durch die elektronische Steuereinheit (50), ob ein aktueller Fahrzustand ein Fahrzustand ist, in dem die Kupplung (20) auf der Grundlage einer Bestimmung, ob eine Motordrehzahl in einen festgelegten Drehzahlbereich fällt, wenn die Kupplung (20) in Eingriff in einer aktuellen Getriebestufe des Getriebes (18) während der Ausführung der Schubbetriebsteuerung ist, in Eingriff gebracht werden kann;
Verhindern des Eingreifens der Kupplung (20) durch die elektronische Steuereinheit (50), wenn die elektronische Steuereinheit (50) bestimmt, dass der aktuelle Fahrzustand nicht der Fahrzustand ist, in dem die Kupplung (20) während der Ausführung der Schubbetriebsteuerung in Eingriff gebracht werden kann; und
Ausführen der Schlupfsteuerung durch die elektronische Steuereinheit (50), wenn die festgelegte Beendigungsbedingung während der Ausführung der Schubbetriebsteuerung gewährleistet ist und eine Beschleunigungsanforderung durch einen Betrieb des Beschleunigungsbetätigungselements (40) gemacht wird, wenn das Eingreifen der Kupplung (20) verhindert wird.

6. Steuerverfahren nach Anspruch 5, ferner umfassend:
Ausführen der Schlupfsteuerung durch die elektronische Steuereinheit (50) durch Steuern der Verlagerung der Kupplung (20) durch den Kupplungsaktuator (22), sodass die Motordrehzahl in den festgelegten Drehzahlbereich fällt,
wobei der festgelegte Drehzahlbereich ein Drehzahlbereich ist, in dem die Motordrehzahl eine festgelegte obere Grenzdrehzahl nicht überschreitet und nicht unter eine festgelegte untere Grenzdrehzahl fällt.

7. Steuerverfahren nach Anspruch 5 oder 6, ferner umfassend
Bestimmen, durch die elektronische Steuereinheit (50), ob ein verstrichener Zeitraum von der Beendigung der letzten Schlupfsteuerung mindestens gleich zu einem festgelegten verstrichenen Zeitraum ist; und
Ausführen der Schlupfsteuerung durch die elektronische Steuereinheit (50), wenn die elektronische Steuereinheit (50) bestimmt, dass der verstrichene Zeitraum mindestens gleich dem festgelegten verstrichenen Zeitraum ist.

8. Steuerverfahren nach einem der Ansprüche 5 bis 7, ferner umfassend:
Bestimmen, durch die elektronische Steuereinheit (50), ob die Dauer der Schlupfsteuerung kürzer als eine festgelegte Dauer ist; und
Fortsetzen der Schlupfsteuerung durch die elektronische Steuereinheit (50), wenn die elektronische Steuereinheit (50) während der Schlupfsteuerung bestimmt, dass die Dauer kürzer als die festgelegte Dauer ist.

## Revendications

1. Dispositif de commande pour un véhicule comprenant un moteur (12), des roues motrices (14), un élément d'opération d'accélération (40), une transmission (18) constituant une partie d'un trajet de transmission de puissance entre le moteur (12) et les roues motrices (14), la transmission (18) étant conçue pour commuter un étage d'engrenage par une opération manuelle, un embrayage (20) conçu pour connecter et déconnecter le trajet de transmission de puissance entre le moteur (12) et la transmission (18) et un actionneur d'embrayage (22) conçu pour commuter entre enclenchement, patinage et désenclenchement de l'embrayage (20),
le dispositif de commande comprenant
une unité de commande électronique (50) conçue pour :
commuter un état d'actionnement de l'embrayage (20) par l'actionneur d'embrayage (22) ;
exécuter une commande de marche à l'état débrayé permettant de désenclencher l'embrayage (20) en vue d'un déplacement lorsqu'une condition de déclenchement spécifiée est établie pendant le déplacement, pendant lequel l'étage d'engrenage de la transmission (18) est défini et l'embrayage (20) est enclenché ; et
mettre fin à l'exécution de la commande de marche à l'état débrayé lorsqu'une condition d'achèvement spécifiée est établie pendant l'exécution de la commande de marche à l'état débrayé ;
**caractérisé en ce que** l'unité de commande électronique (50) est conçue pour déterminer si un état de déplacement actuel est un état de déplacement où l'embrayage (20) peut être enclenché en fonction d'une détermination de savoir si une vitesse du moteur se situe dans une plage de vitesses spécifiée lorsque l'embrayage (20) est enclenché à un étage d'engrenage actuel de la transmission (18) pendant l'exécution de la commande de marche à l'état débrayé ;
empêcher l'enclenchement de l'embrayage (20) lorsque l'unité de commande électronique (50) détermine que l'état actuel de déplacement n'est pas l'état de déplacement où l'embrayage (20) peut être enclenché pendant l'exécution de la commande de marche à l'état débrayé ; et
réaliser une régulation anti-patinage, étant une régulation dans laquelle l'embrayage (20) transmet une puissance depuis le moteur (12) comme un état où l'embrayage (20) patine, lorsque la condition d'achèvement spécifiée est établie pendant l'exécution de la commande de marche à l'état débrayé et une demande d'accélération est effectuée par le biais d'une opération de l'élément d'opération d'accélération (40) lorsque l'enclenchement de l'embrayage (20) est empêché.

2. Dispositif de commande selon la revendication 1, dans lequel
l'unité de commande électronique (50) est conçue pour exécuter la commande de marche à l'état débrayé par la commande du déplacement de l'embrayage (20) par l'actionneur de l'embrayage (22) de manière que la vitesse du moteur se situe dans la plage de vitesses spécifiée,
la plage de vitesses spécifiée est une plage de vitesses où la vitesse du moteur ne dépasse pas une vitesse de limite supérieure spécifiée et ne se situe pas au-dessous d'une vitesse de limite inférieure spécifiée.

3. Dispositif de commande selon la revendication 1 ou 2, dans lequel
l'unité de commande électronique (50) est conçue pour
déterminer si un intervalle de temps écoulé à partir de l'achèvement de la dernière régulation anti-patinage est au moins égal à un intervalle de temps écoulé spécifié et l'unité de commande électronique (50) est conçue pour effectuer la régulation anti-patinage lorsque l'unité de commande électronique (50) détermine que l'intervalle de temps écoulé est au moins égal à l'intervalle de temps écoulé spécifié.

4. Dispositif de commande selon l'une quelconque des revendications 1 à 3, dans lequel
l'unité de commande électronique (50) est conçue pour déterminer si la durée de la régulation anti-patinage est plus courte que la durée spécifiée et l'unité de commande électronique (50) est conçue pour continuer la régulation anti-patinage lorsque l'unité de commande électronique (50) détermine pendant la régulation anti-patinage que la durée est plus courte que la durée spécifiée.

5. Procédé de commande pour un véhicule comprenant un moteur (12), des roues motrices (14), un élément d'opération d'accélération (40), une transmission (18) constituant une partie d'un trajet de transmission de puissance entre le moteur (12) et les roues motrices (14), la transmission (18) étant conçue pour commuter un étage d'engrenage par une opération manuelle, un embrayage (20) conçu pour connecter et déconnecter le trajet de transmission de puissance entre le moteur (12) et la transmission (18), un actionneur d'embrayage (22) conçu pour commuter entre enclenchement, patinage et désenclenchement de l'embrayage (20) et une unité de commande électronique (50) conçue pour commuter un état d'actionnement de l'embrayage (20) par l'actionneur d'embrayage (22),
le procédé de commande comprenant :
l'exécution d'une commande de marche à l'état débrayé permettant de désenclencher l'embrayage (20) en vue d'un déplacement par l'unité de commande électronique (50) lorsqu'une condition de déclenchement spécifiée est établie pendant le déplacement, pendant lequel l'étage d'engrenage de la transmission (18) est défini et l'embrayage (20) est enclenché ; et
l'achèvement de l'exécution de la commande de marche à l'état débrayé par l'unité de commande électronique (50) lorsqu'une condition d'achèvement spécifiée est établie pendant l'exécution de la commande de marche à l'état débrayé ;
**caractérisé par** la détermination, par l'unité de commande électronique (50), de savoir si un état de déplacement actuel est un état de déplacement où l'embrayage (20) peut être enclenché en fonction d'une détermination de savoir si une vitesse du moteur se situe dans une plage de vitesses spécifiée lorsque l'embrayage (20) est enclenché à un étage d'engrenage actuel de la transmission (18) pendant l'exécution de la commande de marche à l'état débrayé ;
l'étape consistant à empêcher l'enclenchement de l'embrayage (20) par l'unité de commande électronique (50) lorsque l'unité de commande électronique (50) détermine que l'état actuel de déplacement n'est pas l'état de déplacement où l'embrayage (20) peut être enclenché pendant l'exécution de la commande de marche à l'état débrayé ; et
la réalisation d'une régulation anti-patinage par l'unité de commande électronique (50) lorsque la condition d'achèvement est établie pendant l'exécution de la commande de marche à l'état débrayé et une demande d'accélération est effectuée par le biais d'une opération de l'élément d'opération d'accélération (40) lorsque l'enclenchement de l'embrayage (20) est empêché.

6. Procédé de commande selon la revendication 5, comprenant en outre la réalisation de la régulation anti-patinage par l'unité de commande électronique (50) par la commande du déplacement de l'embrayage (20) par l'actionneur de l'embrayage (22) de manière que la vitesse du moteur se situe dans la plage de vitesses spécifiée,
la plage de vitesses spécifiée étant une plage de vitesses où la vitesse du moteur ne dépasse pas une vitesse de limite supérieure spécifiée et ne se situe pas au-dessous d'une vitesse de limite inférieure spécifiée.

7. Procédé de commande selon la revendication 5 ou 6, comprenant en outre :
la détermination, par l'unité de commande électronique (50), de savoir si un intervalle de temps écoulé à partir de l'achèvement de la dernière régulation anti-patinage est au moins égal à un intervalle de temps écoulé spécifié ; et
la réalisation de la régulation anti-patinage par l'unité de commande électronique (50) lorsque l'unité de commande électronique (50) détermine que l'intervalle de temps écoulé est au moins égal à l'intervalle de temps écoulé spécifié.

8. Procédé de commande selon l'une quelconque des revendications 5 à 7, comprenant en outre :
la détermination, par l'unité de commande électronique (50), de savoir si une durée de la régulation anti-patinage est plus courte qu'une durée spécifiée ; et
la poursuite de la régulation anti-patinage par l'unité de commande électronique (50) lorsque l'unité de commande électronique (50) détermine pendant la régulation anti-patinage que la durée est plus courte que la durée spécifiée.
